# EUROPEAN PATENT APPLICATION

(11) **EP 4 768 343 A1**
(43) Date of publication of application: **01.07.2026**
(21) Application number: 25214201.3
(22) Date of filing: 07.11.2025
(51) Int. Cl.: B60R 16/02

(54) **VEHICLE**

(30) Priority: 11.12.2024 JP 2024216180
(71) Applicant: TOYOTA JIDOSHA KABUSHIKI KAISHA, Toyota-shi, Aichi-ken 471-8571 (JP)
(72) Inventor: NISHIKI, Nobuyasu, Toyota-shi, 471-8571 (JP)
(74) Representative: TBK

(57) **Abstract**

A vehicle (1) includes an exhaust pipe (50), a battery pack (100), a junction box (300), an electronic device (400), and a base (600). The exhaust pipe (50) is disposed outside the battery pack (100). The battery pack (100) houses the junction box (300), the electronic device (400), and the base (600). The electronic device (400) is provided on the base (600). The base (600) is, as viewed in an upward-downward direction, positioned between the exhaust pipe (50) and the junction box (300) and aligned with the junction box (300) in a width direction of the vehicle (1).

## Description

### CROSS REFERENCE TO RELATED APPLICATIONS

This nonprovisional application is based on Japanese Patent Application No. 2024-216180 filed on December 11, 2024 with the Japan Patent Office, the entire contents of which are hereby incorporated by reference.

### BACKGROUND

### Field

The present disclosure relates to a vehicle.

### Description of the Background Art

The vehicle disclosed in Japanese Patent Laying-Open No. 2021-034251 includes a housing case, a power storage module provided in the housing case, an electronic device and a junction box provided in the housing case, and an exhaust pipe disposed laterally of the housing case.

### SUMMARY

In order to increase the space for the power storage module in the housing case (battery pack), for example, the distance between the junction box and the electronic device needs to be reduced. As a result, the junction box may excessively heat the electronic device in the battery pack.

The present disclosure has been made in view of the above problem. An object of the present disclosure is to provide a vehicle that can suppress heating of an electronic device by a junction box while increasing a housing space in a battery pack.

A vehicle according to an aspect of the present disclosure includes an exhaust pipe, a battery pack, a junction box, an electronic device, and a base. The exhaust pipe is disposed outside the battery pack. The battery pack houses the junction box, the electronic device, and the base. The electronic device is provided on the base. The base is, as viewed in an upward-downward direction, positioned between the exhaust pipe and the junction box and aligned with the junction box in a width direction of the vehicle.

In the vehicle according to an aspect of the present disclosure, preferably, the base includes a support portion and a wall portion. The support portion supports the electronic device. The wall portion is positioned between the electronic device and the battery pack in a forward-backward direction. The wall portion extends from forward of the electronic device to above the electronic device.

More preferably, the vehicle according to an aspect of the present disclosure further includes a battery module. The battery pack further houses the battery module. The wall portion extends to above the battery module.

In the vehicle according to an aspect of the present disclosure, more preferably, the base further includes a shock-absorbing member. The shock-absorbing member is smaller in rigidity than the wall portion. The shock-absorbing member is in contact with an upper side of the wall portion. The battery pack is in contact with an upper side of the shock-absorbing member.

In the vehicle according to an aspect of the present disclosure, more preferably, an upper end portion of the wall portion is separated from the battery pack on an upper side of the wall portion.

In the vehicle according to an aspect of the present disclosure, more preferably, a lower end portion of the wall portion is in contact with the battery pack on a lower side of the wall portion.

In the vehicle according to an aspect of the present disclosure, more preferably, a lower end portion of the wall portion is joined to the battery pack.

In the vehicle according to an aspect of the present disclosure, more preferably, the base further includes a second wall portion. The second wall portion is positioned behind the electronic device. A lower end portion of the second wall portion is joined to the battery pack. The support portion is connected to both the wall portion and the second wall portion.

More preferably, the vehicle according to an aspect of the present disclosure further includes a second electronic device. The base includes a plurality of the support portions. The plurality of support portions include a first support portion and a second support portion. The first support portion supports the electronic device. The second support portion supports the second electronic device. The second support portion is positioned above or below the first support portion.

Preferably, the vehicle according to an aspect of the present disclosure further includes a heater insulator. The heater insulator is positioned between the battery pack and the exhaust pipe.

In the vehicle according to an aspect of the present disclosure, preferably, the battery pack includes an inclined surface portion. The inclined surface portion is aligned with the junction box in the width direction of the vehicle. The inclined surface portion extends, as closer to a front side of the vehicle, to be inclined toward the junction box in the width direction of the vehicle. The exhaust pipe extends along the inclined surface portion. The base is positioned behind the inclined surface portion in the vehicle.

Preferably, the vehicle according to an aspect of the present disclosure further includes a battery module. The battery module is housed in the battery pack. The battery module is electrically connected to the junction box. The junction box includes a first heat-generating component group and a second heat-generating component group. The first heat-generating component group is configured to have an increased temperature higher than a temperature of the second heat-generating component group upon conduction of the junction box with the battery module. The first heat-generating component group does not overlap the base in the upward-downward direction.

In the vehicle according to an aspect of the present disclosure, more preferably, the first heat-generating component group includes a relay, a fuse, a register, a current sensor, or a terminal.

In the vehicle according to an aspect of the present disclosure, more preferably, the first heat-generating component group includes a relay, a fuse, a register, a current sensor, and a terminal.

In the vehicle according to an aspect of the present disclosure, more preferably, the junction box does not overlap the base in the upward-downward direction.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a side view of a vehicle according to Embodiment 1.
Fig. 2 is a plan view partially showing the vehicle according to Embodiment 1.
Fig. 3 is a plan view partially showing the vehicle according to Embodiment 1 in detail.
Fig. 4 is a sectional view of the vehicle of Fig. 3 as viewed in the direction of an arrow IV-IV.
Fig. 5 is a partial sectional view of a vehicle according to Embodiment 2.

### DESCRIPTION OF THE PREFERRED EMBODIMENTS

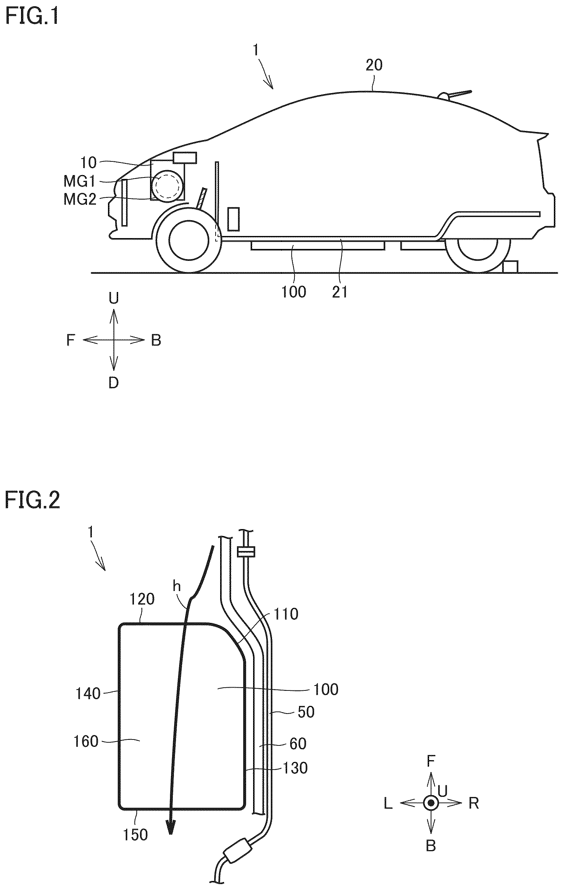

Embodiments of the present disclosure will be described below in detail with reference to the drawings. In the embodiments described below, the same or common components have the same reference sings allotted in the drawings, and description thereof will not be repeated. In Figs. 1 to 3, "U" indicates the upward direction, "D" indicates the downward direction, "F" indicates the forward direction, "B" indicates the backward direction, "L" indicates the left direction, and "R" indicates the right direction. The width direction of the vehicle is a direction along both the right direction and the left direction. The forward-backward direction of the vehicle is a direction along both the forward direction and the backward direction.

### (Embodiment 1)

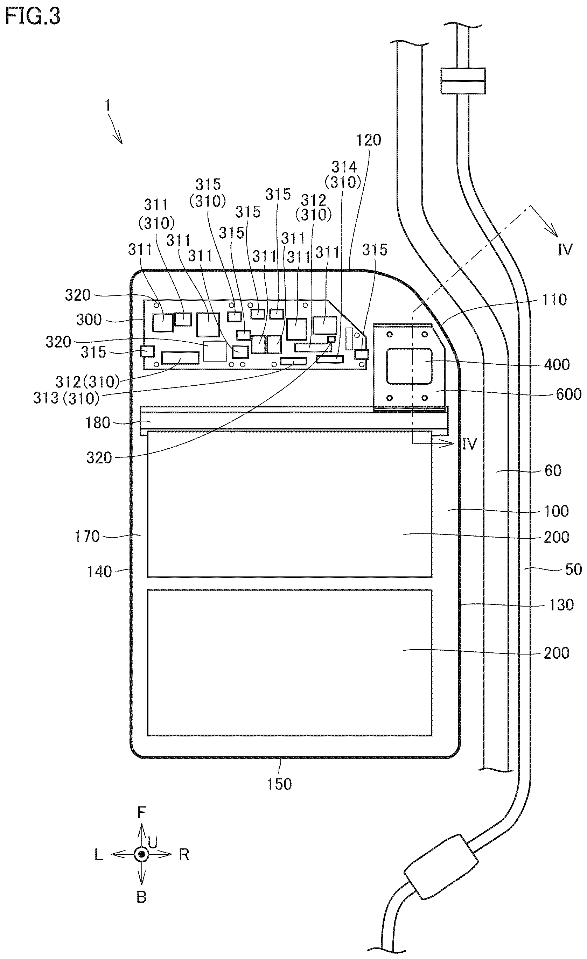

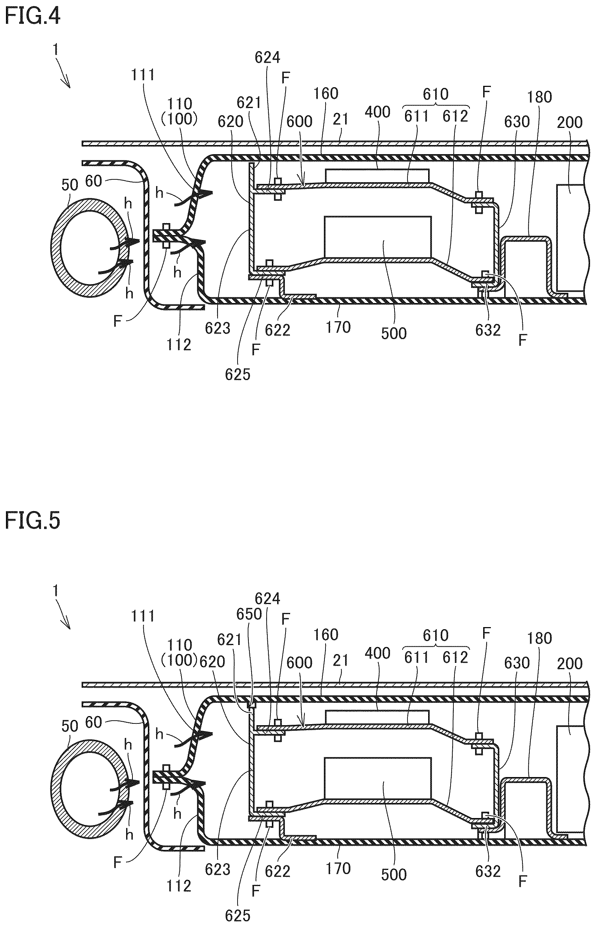

Fig. 1 is a side view of a vehicle according to Embodiment 1. Fig. 2 is a plan view partially showing the vehicle according to Embodiment 1. Fig. 3 is a plan view partially showing the vehicle according to Embodiment 1 in detail. Fig. 4 is a sectional view of the vehicle of Fig. 3 as viewed in the direction of an arrow IV-IV.

As shown in Figs. 1 to 4, a vehicle 1 according to Embodiment 1 of the present disclosure is illustrated as a hybrid electric vehicle capable of traveling on motive power of at least one of a motor and an engine, but vehicle 1 may also be an electrically-powered vehicle that travels on a driving force obtained from electrical energy. Vehicle 1 may also be a plug-in hybrid electric vehicle (PHEV).

Vehicle 1 includes an engine 10, rotating electric machines MG1, MG2, a vehicle body 20, an exhaust pipe 50, a heater insulator 60, a battery pack 100, a battery module 200, a junction box 300, an electronic device 400, a second electronic device 500, and a base 600. Electronic device 400 may also be referred to as a first electronic device.

Engine 10 is driven on fuel supplied from a fuel tank (not shown) and generates a driving force to rotate the drive wheels. Rotating electric machine MG1 mainly functions as a generator. Rotating electric machine MG2 mainly functions as a motor to rotate the drive wheels. Engine 10 and rotating electric machines MG1, MG2 are positioned forward of battery pack 100.

Vehicle body 20 includes a floor panel 21 and a frame member (not shown) that forms the frame of vehicle 1.

Exhaust pipe 50 is connected to engine 10. Exhaust gas discharged from engine 10 flows through exhaust pipe 50. Exhaust pipe 50 is positioned below floor panel 21. Exhaust pipe 50 extends approximately in the forward-backward direction. Exhaust pipe 50 is positioned outside battery pack 100. Exhaust pipe 50 extends forward beyond battery pack 100 in the forward-backward direction. Exhaust pipe 50 extends backward beyond battery pack 100 in the forward-backward direction.

Heater insulator 60 is positioned below floor panel 21. Heater insulator 60 extends approximately in the forward-backward direction. Heater insulator 60 is positioned between battery pack 100 and exhaust pipe 50. Heater insulator 60 extends forward beyond battery pack 100 in the forward-backward direction. Heater insulator 60 extends backward beyond battery pack 100. The material of heater insulator 60 is not particularly limited. Heater insulator 60 may be made of metal or resin.

Battery pack 100 is disposed below floor panel 21. Battery pack 100 may be supported by the frame member of vehicle body 20. Battery pack 100 may also be simply referred to as a pack or a case. Battery pack 100 may or may not have a hermetically sealed internal space. Battery pack 100 houses battery module 200, junction box 300, electronic device 400, second electronic device 500, and base 600.

Battery pack 100 includes an inclined surface portion 110, a front surface portion 120, a first side surface portion 130, a second side surface portion 140, a back surface portion 150, a top surface portion 160, a bottom surface portion 170, and a reinforcing portion 180. For the sake of convenience, top surface portion 160 is not shown in Fig. 3 to illustrate the interior of battery pack 100.

Inclined surface portion 110 is aligned with junction box 300 within battery pack 100 in the width direction of vehicle 1. Inclined surface portion 110 extends, as closer to the front side of the vehicle, to be inclined toward junction box 300 in the width direction of vehicle 1. Exhaust pipe 50 and heater insulator 60 extend along inclined surface portion 110.

Inclined surface portion 110 includes an upper inclined surface portion 111 and a lower inclined surface portion 112. Upper inclined surface portion 111 is aligned with lower inclined surface portion 112 in the upward-downward direction. Upper inclined surface portion 111 is fastened to lower inclined surface portion 112 with a fastening member F. Each of fastening member F and another fastening member F, which will be described later, may be a combination of a bolt and a nut. The bolt may be, for example, a welded bolt.

Front surface portion 120 is disposed forward of junction box 300. Front surface portion 120 is connected to the front end of inclined surface portion 110. Front surface portion 120 extends in the width direction of vehicle 1.

First side surface portion 130 is disposed opposite to junction box 300 in the width direction of vehicle 1 as viewed from electronic device 400, second electronic device 500, and base 600. First side surface portion 130 is connected to the back end of inclined surface portion 110. First side surface portion 130 extends in the forward-backward direction. First side surface portion 130 extends substantially parallel to exhaust pipe 50 and heater insulator 60.

Second side surface portion 140 is connected to front surface portion 120. Second side surface portion 140 extends in the forward-backward direction. Second side surface portion 140 is positioned opposite to first side surface portion 130 in battery pack 100.

Back surface portion 150 is connected to the back end of first side surface portion 130 and the back end of second side surface portion 140. Top surface portion 160 is connected to inclined portion 110, front surface portion 120, first side surface portion 130, second side surface portion 140, and back surface portion 150. Top surface portion 160 faces floor panel 21. Top surface portion 160 may be the floor panel. Bottom surface portion 170 is connected to inclined surface portion 110, front surface portion 120, first side surface portion 130, second side surface portion 140, and back surface portion 150. Bottom surface portion 170 is positioned opposite to top surface portion 160 in battery pack 100.

Reinforcing portion 180 extends parallel to the width direction of vehicle 1. Reinforcing portion 180 is disposed behind junction box 300, electronic device 400, second electronic device 500, and base 600. Reinforcing portion 180 is disposed behind battery module 200. Reinforcing portion 180 is joined to bottom surface portion 170 by welding or the like.

Battery module 200 includes a plurality of battery stacks. Each battery stack is configured of an array of a plurality of battery cells. The battery cell is a secondary battery such as a nickel-metal hydride battery or a lithium-ion battery. The battery cell may include a liquid electrolyte or a solid electrolyte.

Battery module 200 is housed in battery pack 100. Battery module 200 is disposed between first side surface portion 130 and second side surface portion 140. Battery module 200 is not disposed between inclined surface portion 110 and second side surface portion 140. Battery module 200 is disposed behind junction box 300, electronic device 400, second electronic device 500, and base 600. Battery module 200 is electrically connected to junction box 300.

Junction box 300 includes a first heat-generating component group 310 and a second heat-generating component group 320. First heat-generating component group 310 is configured to have an increased temperature higher than a temperature of second heat-generating component group 320 upon conduction of junction box 300 with battery module 200. Further, at least first heat-generating component group 310 does not overlap base 600 in the upward-downward direction. Typically, junction box 300 as a whole does not overlap base 600 in the upward-downward direction.

First heat-generating component group 310 includes a relay 311, a fuse 312, a resistor 313, a current sensor 314, or a terminal 315. Specifically, first heat-generating component group 310 includes relay 311, fuse 312, resistor 313, current sensor 314, and terminal 315.

For example, terminal 315 is configured to be electrically connected to a power control unit (PCU) disposed outside battery pack 100 via a high-voltage cable. The PCU includes, for example, two inverters and a converter. One inverter is electrically connected to rotating electric machine MG1. The other inverter is connected to rotating electric machine MG2. The converter is electrically connected to battery pack 100 via junction box 300. Junction box 300 includes at least one circuit electrically connected to at least one of battery pack 100, rotating electric machine MG1, or rotating electric machine MG2. Relay 311, fuse 312, resistor 313, and current sensor 314 may be incorporated into any one of the above circuits.

Second heat-generating component group 320 may overlap junction box 300 in the upward-downward direction. Second heat-generating component group 320 may include a metal attachment member, a circuit upper portion, and a communication connector insertion port. The metal attachment member fixes junction box 300 and battery pack 100 to each other. The above-described circuit is disposed on the lower side of the circuit upper portion. A communication cable connected to an electronic control unit (ECU) outside electronic device 400, second electronic device 500, or battery pack 100 may further be connected to the communication connector insertion port.

Electronic device 400 and second electronic device 500 are provided on base 600. Electronic device 400 and second electronic device 500 are each smaller than junction box 300 as viewed in the upward-downward direction. Electronic device 400 and second electronic device 500 are disposed so as to be aligned in the upward-downward direction. For example, one of electronic device 400 and second electronic device 500 may be an ECU, and the other electronic device may be a satellite battery monitor (SBM).

The SBM is a monitoring unit that monitors the state of battery module 200. The state includes, for example, temperature, voltage, and/or current. The ECU may control each device to bring vehicle 1 into a desired state based on a signal received from the SBM and information such as a program stored in the memory. The ECU may be configured to receive signals (e.g., accelerator opening signal, vehicle speed signal, or the like) from various sensors (not shown) in addition to the SBM.

Base 600 is, as viewed in the upward-downward direction, positioned between exhaust pipe 50 and junction box 300 and aligned with junction box 300 in the width direction of vehicle 1. Base 600 is positioned behind inclined surface portion 110 in the vehicle. Base 600 is aligned with inclined surface portion 110 in the width direction of vehicle 1.

Base 600 includes a plurality of support portions 610, a wall portion 620, and a second wall portion 630. Wall portion 620 may also be referred to as a first wall portion. Each of the plurality of support portions 610 is connected to both wall portion 620 and second wall portion 630.

Support portion 610 supports electronic device 400. More specifically, the plurality of support portions 610 include a first support portion 611 and a second support portion 612, and first support portion 611 supports electronic device 400. Second support portion 612 supports second electronic device 500. Second support portion 612 is positioned above or below first support portion 611. In the present embodiment, second support portion 612 is positioned below first support portion 611. First support portion 611 and second support portion 612 are plate-shaped members. First support portion 611 is fixed to wall portion 620 and second wall portion 630 with a plurality of fastening members F.

Wall portion 620 is positioned between electronic device 400 and battery pack 100 in the forward-backward direction. More specifically, wall portion 620 is positioned between electronic device 400 and inclined surface portion 110 in the forward-backward direction.

Wall portion 620 extends from forward of electronic device 400 to above electronic device 400. Wall portion 620 extends from forward of second electronic device 500 to above second electronic device 500. Wall portion 620 extends to above battery module 200. However, an upper end portion 621 of wall portion 620 is spaced apart from battery pack 100 on the upper side of wall portion 620. Upper end portion 621 is positioned forward of electronic device 400.

A lower end portion 622 of wall portion 620 is positioned below electronic device 400 and second electronic device 500. Lower end portion 622 of wall portion 620 is in contact with battery pack 100 on the lower side of wall portion 620. Lower end portion 622 of wall portion 620 is joined to bottom surface portion 170 of battery pack 100 by welding or the like.

Wall portion 620 further includes a central wall portion 623, a first backward extension portion 624, and a second backward extension portion 625. Central wall portion 623 is positioned forward of second electronic device 500. Central wall portion 623 extends downward from upper end portion 621. First backward extension portion 624 extends backward from the lower end of upper end portion 621 (i.e., the upper end of central wall portion 623). First backward extension portion 624 is fixed to first support portion 611 with fastening member F. Second backward extension portion 625 extends backward from the lower end of central wall portion 623. Second backward extension portion 625 is fixed to both second support portion 612 and lower end portion 622 with fastening member F.

Second wall portion 630 is positioned behind electronic device 400 and second electronic device 500. More specifically, second wall portion 630 is positioned below electronic device 400. A lower end portion 632 of second wall portion 630 is fixed to second support portion 612 and reinforcing portion 180 of battery pack 100 with fastening member F.

As described above, vehicle 1 according to the present embodiment includes exhaust pipe 50, battery pack 100, junction box 300, electronic device 400, and base 600. Exhaust pipe 50 is disposed outside battery pack 100. Battery pack 100 houses junction box 300, electronic device 400, and base 600. Electronic device 400 is provided on base 600. Base 600 is, as viewed in the upward-downward direction, positioned between exhaust pipe 50 and junction box 300 and aligned with junction box 300 in the width direction of vehicle 1.

With the configuration described above, since base 600 on which electronic device 400 is provided is aligned with junction box 300 in the width direction of vehicle 1 as viewed in the upward-downward direction, electronic device 400 can be prevented from being heated from below electronic device 400 by the heat generated from junction box 300. Further, forward of or behind junction box 300 and base 600, a large housing space of battery pack 100 can be achieved. For example, battery pack 100 can achieve a large housing space for battery module 200. As a result, the capacity of battery module 200 can also be increased.

With the configuration described above, thus, heating of electronic device 400 by junction box 300 can be suppressed while increasing the housing space within battery pack 100.

In Figs. 2 and 4, flows of heat are indicated by symbols h. As shown in Figs. 2 and 4, a flow of the heat transferred from the exhaust gas, which flows through exhaust pipe 50 and is a heat source, through exhaust pipe 50 and heater insulator 60 to battery pack 100 and a flow of the heat transferred from engine 10 to battery pack 100 are shown in the present embodiment. As shown in Fig. 2, this heat reaches forward of surface portion 120 of battery pack 100, flows between top surface portion 160 and floor panel 21, and further flows to backward of battery pack 100. In contrast, as shown in Fig. 4, in the present embodiment, a flow of the heat is shown that is transferred from the exhaust gas, which flows through exhaust pipe 50 and is a heat source, through exhaust pipe 50 and heater insulator 60 to battery pack 100. This heat may be further transferred to the interior of battery pack 100 through inclined surface portion 110.

In the present embodiment, thus, base 600 includes support portion 610 and wall portion 620. Support portion 610 supports electronic device 400. Wall portion 620 is positioned between electronic device 400 and battery pack 100 in the forward-backward direction of the vehicle. Wall portion 620 extends from forward of electronic device 400 to above electronic device 400.

With the configuration described above, wall portion 620 can suppress transfer of the heat, transferred from exhaust pipe 50 to battery pack 100, further to electronic device 400.

Vehicle 1 according to the present embodiment further includes battery module 200. Battery pack 100 further houses battery module 200. Wall portion 620 extends to above battery module 200.

With the configuration described above, upper end portion 621 of wall portion 620 is located at a high position relative to any other component housed in battery pack 100. As a result, wall portion 620 can further suppress transfer of the heat, transferred from exhaust pipe 50 to battery pack 100, further to electronic device 400.

In the present embodiment, upper end portion 621 of wall portion 620 is separated from battery pack 100 on the upper side of wall portion 620.

With the configuration described above, wall portion 620 can suppress contact of wall portion 620 with battery pack 100 during vibration of vehicle 1 while further suppressing transfer of the heat, transferred from exhaust pipe 50 to battery pack 100, further to electronic device 400.

In the present embodiment, lower end portion 622 of wall portion 620 is in contact with battery pack 100 on the lower side of wall portion 620.

With the configuration described above, wall portion 620 can further suppress transfer of the heat, transferred from exhaust pipe 50 to battery pack 100, further to electronic device 400.

In the present embodiment, lower end portion 622 of wall portion 620 is joined to battery pack 100.

With the configuration described above, wall portion 620 can stabilize base 600, on which electronic device 400 is provided, while further suppressing transfer of the heat, transferred from exhaust pipe 50 to battery pack 100, further to electronic device 400.

In the present embodiment, base 600 further includes second wall portion 630. Second wall portion 630 is positioned behind electronic device 400. Lower end portions 622, 632 of second wall portion 630 are joined to battery pack 100. Support portion 610 is connected to both wall portion 620 and second wall portion 630.

With the configuration described above, base 600 can stably support electronic device 400.

In the present embodiment, vehicle 1 according to the present embodiment further includes second electronic device 500. Base 600 includes the plurality of support portions 610. The plurality of support portions 610 include first support portion 611 and second support portion 612. First support portion 611 supports electronic device 400. Second support portion 612 supports second electronic device 500. Second support portion 612 is positioned above or below first support portion 611.

With the configuration described above, even when battery pack 100 further houses second electronic device 500, a large housing space of battery pack 100 can be achieved forward of or behind junction box 300 and base 600.

Vehicle 1 according to the present embodiment further includes heater insulator 60. Heater insulator 60 is positioned between battery pack 100 and exhaust pipe 50.

With the configuration described above, transfer of heat from exhaust pipe 50 to battery pack 100 can be suppressed.

In the present embodiment, battery pack 100 includes inclined surface portion 110. Inclined surface portion 110 is aligned with junction box 300 in the width direction of vehicle 1. Inclined surface portion 110 extends, as closer to a front side of the vehicle, to be inclined toward junction box 300 in the width direction of vehicle 1. Exhaust pipe 50 extends along inclined surface portion 110. Base 600 is positioned behind inclined surface portion 110 in the vehicle.

With the configuration described above, electronic device 400 can be disposed in the gap between junction box 300 having a relatively large size and inclined surface portion 110. At the same time, a large housing space of accommodating battery pack 100 can be achieved in front of or behind junction box 300 and base 600.

In the present embodiment, vehicle 1 according to the present embodiment further includes battery module 200. Battery module 200 is housed in battery pack 100. Battery module 200 is electrically connected to junction box 300. Junction box 300 includes first heat-generating component group 310 and second heat-generating component group 320. First heat-generating component group 310 is configured to have an increased temperature higher than a temperature of second heat-generating component group 320 upon conduction of junction box 300 with battery module 200. First heat-generating component group 310 does not overlap base 600 in the upward-downward direction.

With the configuration described above, the distance between first heat-generating component group 310, which becomes relatively high in temperature, and base 600 can be achieved, thereby suppressing transfer of the heat from first heat-generating component group 310 to electronic device 400.

In the present embodiment, first heat-generating component group 310 includes relay 311, fuse 312, resistor 313, current sensor 314, or terminal 315.

With the configuration described above, the distance between at least one component, which becomes relatively high in temperature, and base 600 can be achieved, thereby suppressing transfer of the heat from the component to electronic device 400.

In the present embodiment, first heat-generating component group 310 includes relay 311, fuse 312, resistor 313, current sensor 314, and terminal 315.

With the configuration described above, the distance between these components, which become relatively high in temperature, and base 600 can be achieved, thereby suppressing transfer of the heat from these components to electronic device 400.

In the present embodiment, junction box 300 does not overlap base 600 in the upward-downward direction.

With the configuration described above, the distance between junction box 300 and base 600 can be further increased, thereby further suppressing transfer of the heat from junction box 300 to electronic device 400.

### (Embodiment 2)

Next, a vehicle according to Embodiment 2 of the present disclosure will be described. The vehicle according to Embodiment 2 is different from vehicle 1 according to Embodiment 1 in the configuration of wall portion 620. Thus, the configuration and effects similar to those of vehicle 1 according to Embodiment 1 will not be repeated.

Fig. 5 is a partial sectional view of the vehicle according to Embodiment 2. The sectional view shown in Fig. 5 in Embodiment 2 corresponds to the sectional view shown in Fig. 4 in Embodiment 1.

As shown in Fig. 5, in Embodiment 2, base 600 further includes a shock-absorbing member 650. Shock-absorbing member 650 is smaller in rigidity than wall portion 620. Shock-absorbing member 650 is in contact with the upper side of wall portion 620. Battery pack 100 is in contact with the upper side of shock-absorbing member 650.

With the configuration described above, wall portion 620 and shock-absorbing member 650 can suppress direct contact of wall portion 620 with battery pack 100 during vibration of vehicle 1 while further suppressing transfer of the heat, transferred from exhaust pipe 50 to battery pack 100, further to electronic device 400.

More specifically, shock-absorbing member 650 is in contact with the upper side of upper end portion 621 of wall portion 620. Shock-absorbing member 650 is in contact with top surface portion 160.

The configurations that can be combined may be combined with each other in the description of the embodiments described above.

Although the embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. A vehicle comprising:
an exhaust pipe (50);
a battery pack (100);
a junction box (300);
an electronic device (400); and
a base (600), wherein
the exhaust pipe (50) is disposed outside the battery pack (100),
the battery pack (100) houses the junction box (300), the electronic device (400), and the base (600),
the electronic device (400) is provided on the base (600), and
the base (600) is, as viewed in an upward-downward direction, positioned between the exhaust pipe (50) and the junction box (300) and aligned with the junction box (300) in a width direction of the vehicle (1).

2. The vehicle according to claim 1, wherein
the base (600) includes a support portion (610) and a wall portion (620),
the support portion (610) supports the electronic device (400),
the wall portion (620) is positioned between the electronic device (400) and the battery pack (100) in a forward-backward direction, and
the wall portion (620) extends from forward of the electronic device (400) to above the electronic device (400).

3. The vehicle according to claim 2, further comprising a battery module (200), wherein
the battery pack (100) further houses the battery module (200), and
the wall portion (620) extends to above the battery module (200).

4. The vehicle according to claim 2, wherein
the base (600) further includes a shock-absorbing member (650),
the shock-absorbing member (650) is smaller in rigidity than the wall portion (620),
the shock-absorbing member (650) is in contact with an upper side of the wall portion (620), and
the battery pack (100) is in contact with an upper side of the shock-absorbing member (650).

5. The vehicle according to claim 2, wherein an upper end portion (621) of the wall portion (620) is separated from the battery pack (100) on an upper side of the wall portion (620).

6. The vehicle according to claim 2, wherein a lower end portion (622) of the wall portion (620) is in contact with the battery pack (100) on a lower side of the wall portion (620).

7. The vehicle according to claim 2, wherein a lower end portion (622) of the wall portion (620) is joined to the battery pack (100).

8. The vehicle according to claim 7, wherein
the base (600) further includes a second wall portion (630),
the second wall portion (630) is positioned behind the electronic device (400),
a lower end portion (632) of the second wall portion (630) is joined to the battery pack (100), and
the support portion (610) is connected to both the wall portion (620) and the second wall portion (630).

9. The vehicle according to claim 2, further comprising a second electronic device (500), wherein
the base (600) includes a plurality of the support portions (610),
the plurality of support portions (610) include a first support portion (611) and a second support portion (612),
the first support portion (611) supports the electronic device (400),
the second support portion (612) supports the second electronic device (500), and
the second support portion (612) is positioned above or below the first support portion (611).

10. The vehicle according to claim 1, further comprising a heater insulator (60),
wherein the heater insulator (60) is positioned between the battery pack (100) and the exhaust pipe (50).

11. The vehicle according to claim 1, wherein
the battery pack (100) includes an inclined surface portion (110),
the inclined surface portion (110) is aligned with the junction box (300) in the width direction of the vehicle,
the inclined surface portion (110) extends, as closer to a front side of the vehicle, to be inclined toward the junction box (300) in the width direction of the vehicle,
the exhaust pipe (50) extends along the inclined surface portion (110), and
the base (600) is positioned behind the inclined surface portion (110) in the vehicle.

12. The vehicle according to claim 1, further comprising a battery module (200), wherein
the battery module (200) is housed in the battery pack (100),
the battery module (200) is electrically connected to the junction box (300),
the junction box (300) includes a first heat-generating component group (310) and a second heat-generating component group (320),
the first heat-generating component group (310) is configured to have an increased temperature higher than a temperature of the second heat-generating component group (320) upon conduction of the junction box (300) with the battery module (200), and
the first heat-generating component group (310) does not overlap the base (600) in the upward-downward direction.

13. The vehicle according to claim 12, wherein the first heat-generating component group (310) includes a relay (311), a fuse (312), a register (313), a current sensor (314), or a terminal (315).

14. The vehicle according to claim 12, wherein the first heat-generating component group (310) includes a relay (311), a fuse (312), a register (313), a current sensor (314), and a terminal (315).

15. The vehicle according to claim 1, wherein the junction box (300) does not overlap the base (600) in the upward-downward direction.
